# EUROPÄISCHE PATENTSCHRIFT

(11) **EP 3 786 349 B1**
(45) Veröffentlichungstag und Bekanntmachung des Hinweises auf die Patenterteilung: **01.06.2022**
(21) Anmeldenummer: 19194436.2
(22) Anmeldetag: 29.08.2019
(51) Int. Cl.: D06M 15/431, B27K 3/00, C09K 21/12, D21H 21/34

(54) **FLAMMSCHUTZAUSRÜSTUNG SAUGFÄHIGER SUBSTRATE**
FLAME RETARDANT TREATMENT OF ABSORBENT SUBSTRATES
TRAITEMENT IGNIFUGE DE SUBSTRATS ABSORBANTS

(43) Veröffentlichungstag der Anmeldung: 03.03.2021
(73) Patentinhaber: Ecoatech GmbH, 86167 Augsburg (DE)
(72) Erfinder: Niederstadt, Rule, 86167 Augsburg (DE)
(74) Vertreter: Reitstötter Kinzebach

(56) Entgegenhaltungen:
- GB-A- 740 269
- US-A- 2 809 941

## Beschreibung

Die vorliegende Erfindung betrifft ein Verfahren zur Flammschutzausrüstung saugfähiger Substrate, bei dem zwei nichtionische oligomere Komponenten auf das Substrat aufgebracht und miteinander vernetzt werden.

Für die Ausrüstung von saugfähigen Substanzen wie Papier, Textilen, Vliesstoffen oder Komposite Materialien werden oftmals wässrige Produkte verwendet, welche Salzlösungen enthalten. Allerdings schränkt die Wasserlöslichkeit der ionischen Salze den späteren Gebrauch sowie deren Anwendungen ein. Eine Wasch- oder Wässerungsbeständigkeit wird nicht erreicht. Diese ist jedoch für viele Anwendungen erforderlich, wie zum Beispiel für Arbeitskleidung oder automobile Filtermaterialien.

Wasserlöslich sind insbesondere salzartige Substanzen, die in Wasser dissoziieren und lonenpaare aufbauen. Wegen ihrer hohen Wirksamkeit werden oft Phosphor-Stickstoff-Kombinationen verwendet. Insbesondere Ammoniumsalze bieten sich hierfür an, da bei diesen sowohl das Kation als auch das Säureanion einen Beitrag zur Flammhemmung leisten. In großen Maßstab werden zum Beispiel Ammoniumphosphate und Polyphosphate in der Industrie als auch in der Landwirtschaft eingesetzt.

Ein bedeutender Nachteil von Salzen im Allgemeinen ist jedoch die schlechte Verträglichkeit mit Polymerdispersion, die im Kontakt mit Salzlösungen koagulieren. Bei Ammoniumsalzen ist ferner die Bildung von Ammoniak-Gas problematisch. Ammoniak entsteht beim Erwärmen sowie beim Kontakt mit alkalischen Medien.

Außerdem können salzartige Strukturen beim Trocknen kristallisieren, sind hygroskopisch und führen zu Korrosion bei Kontakt mit Metalloberflächen.

In zahlreichen Anwendungen ist es erforderlich, eine Wässerungsbeständigkeit des Flammschutzes zu erreichen. Die ist problematisch, da der Flammschutz in wässriger Lösung aufgetragen wird, aber nach der Applikation wasserunlöslich sein muss. Dies gelingt durch eine Reaktion der aufgetragenen Komponenten auf der Ware, indem reaktive Gruppen im Flammschutz aktiviert werden.

Für das Erreichen einer Wasch- und Wässerungsbeständigkeit sind jedoch Lösungen beschrieben worden, bei denen die saugfähigen Materialien zunächst mit reaktive Substanzen getränkt werden und diese Substanzen anschließend durch Wärme oder weitere Komponenten zur Reaktion gebracht werden.

In der GB740269 wird ein Verfahren zur Flammschutzausrüstung saugfähiger Substrate offenbart, bei dem man ein Umsetzungsprodukt eines Aminoplast-Vorkondensats mit THPC auf das Substrat aufbringt und dann wird das Umsetzungsprodukt auf dem Substrat vernetzt.

In der US 2,809,941 wird beschrieben, dass Tetrakis(hydroxymethyl)-phosphoniumchlorid (THCP) oder Tris(hydroxymethyl)phosphinoxid (THPO) mit Stickstoffverbindungen wie Harnstoff, Harnstoffderivaten oder Melamin zu Polymeren umgesetzt werden können. Textilien werden mit einer Lösung der Monomere imprägniert und getrocknet. Bei erhöhter Temperatur polymerisieren die Monomere. Monomeres Tetrakis(hydroxymethyl)phosphoniumchlorid und Tris(hydroxymethyl)phosphinoxid sind Gefahrstoffe und sollten nur in chemischen Anlagen gehandhabt werden. Die Reaktion von THPC mit den Stickstoffverbindungen läuft nicht direkt sondern nur über die Zwischenstufe des Trihydroxymethylphosphins (THP), wobei Formaldehyd abgespalten wird. Die Reaktion von THPO verläuft sehr viel langsamer als die von THP mit Aminen, Melamin oder Harnstoff Urea. Mit einer vollständigen Umsetzung von THPO auf dem Fasermaterial ist daher nicht zu rechnen.

Die Anmeldung CN 107629248A beschreibt die Kondensation von Tris(hydroxymethyl)phosphinoxid mit Phosphoroxychlorid, wobei lineare und zyklische Oligomere entstehen, die mit Melamin weiter umgesetzt werden. Beim so genannten Proban^{®}-Verfahren wird das Gewebe zunächst mit THPC imprägniert und getrocknet. Danach wird das Gewebe mit Ammoniak begast. THPC reagiert mit dem Ammoniakgas zu einem unlöslichen, dreidimensionalen Polykondensat. Im Anschluss an die Ammoniakbehandlung wird die Ware einem Spül-, Oxidations- und Waschprozess unterzogen, um die gebildeten Ammoniumsalze auszuwaschen und den Phosphor im Polykondensat vom dreiwertigen in den geruchlosen fünfwertigen Zustand zu überführen. Der Nachteil des Verfahrens besteht darin, dass spezielle Anlagen zur Begasung mit Ammoniak-Gas erforderlich sind. Die Durchführung stellt ein Sicherheits-, Kosten- und Umweltproblem für die verarbeitenden Betriebe dar. Alle entstehenden Nebenprodukte müssen anschließend ausgewaschen werden. Das macht die Anwendung auf Substraten wie Papier und Holz unmöglich und stellt auch zunehmend ein Umweltproblem dar.

Die WO 1988/002283A1beschreibt ein Verfahren, bei dem man ein Präpolymer aus Harnstoff und Tetrakis(hydroxymethyl)phosphoniumchlorid auf ein Textil aufbringt, das Textil mit Ammonik begast und das ammonisierte Präpolymer zum Phosphinoxid oxidiert.

Die Erfindung betrifft ein Verfahren zur Flammschutzausrüstung saugfähiger Substrate, bei dem man
(i) ein Umsetzungsprodukt A eines Aminoplast-Vorkondensats mit Tris(hydroxymethyl)phosphinoxid, welches Umsetzungsprodukt freie oder veretherte N-Hydroxymethylgruppen aufweist, auf das Substrat aufbringt; und
(ii) das Umsetzungsprodukt A auf dem Substrat vernetzt.

Erfindungsgemäß verwendet man wasserlösliche multifunktionelle Vorprodukte, die auf dem Substrat ein Netzwerk ausbilden, welches anschließend unlöslich in Wasser ist. Die Vorprodukte sind ausreichend klein, um tief in die porösen Strukturen von Textilien und Papier eindringen zu können. Andererseits sind sie ausreichend groß, dass durch Knüpfen weniger Bindungen ein dreidimensionales Netzwerk ausgebildet wird. Die Handhabung von monomerem THPO beim Flammschutzausrüstvorgang wird vermieden.

Aminoplast-Vorkondensate werden aus der Umsetzung von Formaldehyd mit einem Amin oder Amid erhalten. Geeignete Amine oder Amide sind Melamin, Harnstoff, Guanidin, Benzoguanamin oder Glycoluril. Melamin- Formaldehydkondensate und/oder Harnstoff-Formaldehydkondensate sind vorliegend bevorzugt.

Das Aminoplast-Vorkondensat enthält N-Hydroxymethylgruppen (N-Methylolgruppen), die mit einem Alkohol verethert sein können, um die Geschwindigkeit der Härtung zu steuern. Zur Veretherung kann ein beliebiger einwertiger Alkohol, wie Methanol, Ethanol, Butanol oder Hexanol, verwendet werden. Die Lagerstabilität der Aminoplast-Vorkondensate wird verbessert, wenn die N-Methylolgruppen mit kurzen Alkoholen verethert werden. Aus Kostengründen und durch das sich einstellende Gleichgewicht ist die Veretherung nicht vollständig.

Geeignete Aminoplast-Vorkondensate und ihre Herstellung sind in den DE 2 721 376, DE 4 308 075 A1, DE 1 974 46 14, DE 1 670 439 A, DE 9 087 93 und DE 1 038 519 beschrieben.

Tris(hydroxymethyl)phosphinoxid (THPO) kann in einem wässrigen Medium bei alkalischem pH mit einem Aminoplast-Vorkondensat umgesetzt werden. Dabei reagieren nicht veretherte N-Methylolgruppen schneller als die mit Alkohol umgesetzten. Das hat den Vorteil, dass die reaktiveren freien N-Methylolgruppen verschwinden und dadurch die Lagerstabilität des Umsetzungsprodukts A erhöht wird.

Das Umsetzungsprodukt A ist ein Polymer mit einer breiten Molmassen-Verteilung. Das Umsetzungsprodukt weist vorzugsweise eine mittlere Molmasse von 300 bis 3000 g/mol auf.

Die Summe der Phosphor- und Stickstoffatome macht vorzugsweise 25 bis 45 Gew.-% der Molmasse des Umsetzungsprodukts A aus.

Im Hinblick auf eine optimale Flammschutzwirkung weist das Umsetzungsprodukt A vorzugsweise ein Stickstoff/Phosphor-Atomverhältnis von 4:1 bis 12:1 auf.

Das Umsetzungsprodukt A liegt vor dem Auftrag vorzugsweise als wässrige Lösungen mit einem Feststoffgehalt von 40-80 Gew.-% vor. Wässrige Lösungen mit diesem Feststoffgehalt sind niederviskos und lassen sich gut aufbringen.

Zur Verbesserung des Netzverhaltens kann die Lösung des Umsetzungsproduktes A Netzmittel enthalten. Geeignete Netzmittel sind anionische oder nichtionische Tenside, wie alkoxylierte Fettalkohole, alkoxylierte Fettsäuren, Alkylsulfate, alkoxylierte Alkylsulfate, Alkylsulfosuccinate, alkoxylierte Alkylsulfosuccinate, Polyether-modifizierte Polysiloxanecopolymere oder Alkylphosphonatester.

Die Vernetzung des Umsetzungsprodukts A kann mit sich selbst oder mit anderen Reaktionspartnern erfolgen. Das Umsetzungsprodukt A wird mit sich oder einem Reaktionspartner auf dem Substrat durch Reaktion der N-Hydroxymethylgruppen mit sich oder geeigneten funktionellen Gruppen des Reaktionspartners vernetzt. Geeignete funktionelle Gruppen sind z.B. Epoxygruppen, Aminocarbonylaminogruppen oder Carbamatgruppen. Aufgrund des oligomeren Charakters des Umsetzungsprodukts A und vorzugsweise des Reaktionspartners wird bereits durch das Knüpfen weniger Bindungen ein dreidimensionales Netzwerk ausgebildet. Hierdurch wird eine Fixierung auf dem Substrat und weitgehende Wasserbeständigkeit erreicht.

Man kann Umsetzungsprodukt A und den Reaktionspartner getrennt voneinander auf das Substrat aufbringen; alternativ mischt man die Umsetzungsprodukt A und den Reaktionspartner und bringt das Gemisch auf das Substrat auf.

Die Vernetzung des Umsetzungsprodukts A mit sich oder einem Reaktionspartner erfolgt durch Erwärmen auf eine Temperatur von 60 bis 180°C. Die Geschwindigkeit der Vernetzung hängt neben der Temperatur vom pH-Wert der aufgebrachten Lösung ab. Zur Erhöhung der Lagerstabilität ist das Umsetzungsprodukt A in der Regel auf einen basischen pH eingestellt. Die Vernetzung des Umsetzungsprodukts A erfolgt dagegen bevorzugt bei neutralem bis saurem pH. Daher wird das Umsetzungsprodukt A bzw. das Gemisch des Umsetzungsprodukts A mit einem Reaktionspartner vorzugsweise mit einer Säure versetzt, geeigneterweise vor dem Aufbringen auf das Substrat. Geeignete Säuren sind Mineralsäure, wie Phosphorsäure, phosphorige Säure, Schwefelsäure, Sulfonsäuren, wie Amidosulfonsäure, oder organische Säuren, wie Essigsäure. Es können auch saure Salze wie Ammoniumchlorid zur pH-Einstellung verwendet werden. Der einzustellende pH-Wert richtet sich nach der beabsichtigten Vernetzungstemperatur. Die Vernetzungstemperatur hängt unter anderem von der Temperaturbeständigkeit des Substrats ab. In geeigneten Ausführungsformen vernetzt man bei einer Temperatur von 110 bis 180 °C und einem pH von 6 bis 8 oder einer Temperatur von 60 bis 100 °C und einem pH von 4 bis 6.

In einer Ausführungsform erfolgt die Vernetzung des Umsetzungsprodukts A, vorzugsweise eines solchen auf der Basis eines Harnstoff-Formaldehydharzes, mit Polyamidoamin-epichlorhydrinharz (PAAE). Die Umsetzung des Umsetzungsprodukts A mit PAAE führt zur Bildung wasserunlöslicher Netzwerke.

In einer anderen Ausführungsform erfolgt die Vernetzung des Umsetzungsprodukts A mit einem Umsetzungsprodukt B von Tris(hydroxymethyl)phosphinoxid mit Harnstoff.

Das Umsetzungsprodukt B ist ein Umsetzungsprodukt von THPO mit Harnstoff. THPO reagiert mit Harnstoff schnell in einer exothermen Reaktion. Bei der Umsetzung können geringe Mengen Formaldehyd mitverwendet werden, vorzugsweise in äquimolarer Menge, bezogen auf Harnstoff, oder weniger. Die Umsetzung findet geeigneterweise in einem wässrigen Medium bei pH 8 bis 9 statt. Das Molverhältnis von THPO zu Harnstoff beträgt vorzugsweise 1:3 bis 2:3. Das Umsetzungsprodukt B weist Aminocarbonylaminogruppen (-NH-CO-NH₂) auf, wie durch die folgenden Formelbilder veranschaulicht:

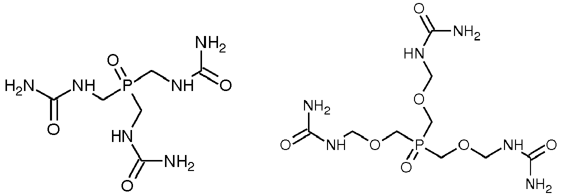

Das Umsetzungsprodukt B weist vorzugsweise eine mittlere Molmasse von 250 bis 650 g/mol auf.

Die Summe der Phosphor- und Stickstoffatome macht vorzugsweise 25-45 Gew.-% der Molmasse des Umsetzungsprodukts B aus.

Das Umsetzungsprodukt B liegt vor dem Auftrag vorzugsweise als wässrige Lösungen mit einem Feststoffgehalt von 40-80 Gew.-% vor. Wässrige Lösungen mit diesem Feststoffgehalt sind niederviskos und lassen sich gut aufbringen.

Man kann Umsetzungsprodukt A und das Umsetzungsprodukt B getrennt voneinander auf das Substrat aufbringen; vorzugsweise jedoch mischt man die Umsetzungsprodukt A und das Umsetzungsprodukt B und bringt das Gemisch auf das Substrat auf.

In einer Ausführungsform bringt man das Umsetzungsprodukt A oder das Gemisch des Umsetzungsprodukts A mit dem Umsetzungsprodukt B zusammen mit einer Polymerdispersion auf das Substrat auf. Aufgrund ihres nichtionischen Charakters sind die Komponenten A und B kompatibel mit Polymerdispersionen und führen nicht zur Koagulation. Geeignete Polymere sind z.B. unter Polyurethanen, Styrol-Butadien-Copolymeren, Ethylen-Vinyl-Copolymeren, Polyacrylaten, Vinylacetaten und Polyacetamiden ausgewählt. Die Polymerdispersionen dienen zum Beschichten, Vernetzen, Verfestigen und zum Erreichen bestimmter Funktionalität auf der Oberfläche. Durch die Erfindung kann gleichzeitig eine Flammschutzausrüstung erfolgen.

Das Aufbringen des Umsetzungsprodukts A oder des Gemisches des Umsetzungsprodukts A mit dem Umsetzungsprodukt B kann durch ein beliebiges geeignetes Verfahren erfolgen, z.B. durch Autoklavieren, Tauch-, Sprüh- oder Lackierverfahren.

Die erfindungsgemäße Flammschutzausrüstung besitzt den Vorteil gegenüber anderen Flammschutzmitteln, dass die beschichteten Textilien nicht nachgewaschen werden müssen.

Das erfindungsgemäße Verfahren eignet sich zur Flammschutzausrüstung saugfähiger Substrate. Z.B. ist das Substrat unter Textilien, einschließlich Vliesen, wie Baumwolle, Zellulose-Regenerat, Polyolefinen, Polyester, Wolle sowie Mischungen der genannten Fasern; Papier, Pappe, Holz oder Komposit-Materialien ausgewählt. Die Ausrüstung erzeugt keine korrosiven Eigenschaften im Kontakt mit Metallteilen, wie z.B. Klammern zur Befestigung von Möbelbezugstoffen.

Die Erfindung wird durch die folgenden Beispiele näher veranschaulicht.

In den Beispielen werden folgende Abkürzungen verwendet:
- FRP: Umsetzungsprodukt eines Melamin-Harnstoff-Formaldehyd-Vorkondensats mit THPO (Molmasse 880 -1900 g/mol; Feststoffgehalt 60%; TECHNOPHOS FR-Polymer erhältlich von Ecoatech GmbH/Augsburg)
- URP: Umsetzungsprodukt von THPO mit Harnstoff (Molverhältnis 1:3 bis 2:3; Molmasse 250-450 g/mol; TECHNOPHOS URP_3 erhältlich von Ecoatech GmbH/Augsburg)

### Beispiel 1: Ausrüstung von Baumwollstoff

Stoff aus 100% Baumwolle wurde über ein Tauch-Quetsch-Verfahren ausgerüstet und bei verschiedenen Temperaturen getrocknet und vernetzt. Die angegebenen pH-Werte wurden durch Zugabe von 70% phosphoriger Säure eingestellt. Anschließend wurden die Stoffe für 24 Stunden in Wasser gelegt und die Fixierrate bestimmt.

| Produkt | pH-Wert | Auflage | Fixierrate 10 Min/120°C | Fixierrate 10 Min/160°C |
|---|---|---|---|---|
| FRP | 8,8 | 30,5% | 23,3% | 71,7% |
| FRP | 6,8 | 29,2% | 41,7% | 77,9% |
| FRP | 5,1 | 30,4% | 77,1% | 81,5% |
| FRP | 3,1 | 32,2% | 65,3% | 77,8% |
| FRP/URP (75/25) | 7,3 | 30,8% | 39,1% | 60,7% |
| FRP/URP (75/25) | 5,1 | 31,7% | 65,2% | 66,3% |
| FRP/URP (75/25) | 3,1 | 31,7% | 57,1% | 60,8% |

### Beispiel 2: Ausrüstung von Papier

Ein Gemisch von 90% FRP und10% URP, das mit 70% phosphoriger Säure auf den angegebenen pH eingestellt war, wurde über eine Leimpresse auf Papier aufgebracht. Anschließend trocknete man für 15 Minuten bei 140°C. Danach erfolgte eine Lagerung von 24 Stunden bei Raumtemperatur. Anschließend wurden die Papiere 6 Stunden in ein Wasserbad eingelegt, danach getrocknet, gewogen und einem Brenntest unterzogen. Beim Brenntest wurde wie in der Norm DIN 4102B2 beschrieben 15 Sekunden am unteren Ende des Papiers beflammt und die Einbrennlänge gemessen.

| pH Wert | Auflage [%] Nach Tauchbad | Fixierrate [%] | Einbrennlänge |
|---|---|---|---|
| pH 3 | 21% | 90% | 5 cm |
| pH 4 | 26% | 81% | 6 cm |
| pH 5 | 35% | 66% | 4 cm |
| pH 6 | 36% | 69% | 5 cm |
| pH 7 | 35% | 54% | 5 cm |

### Beispiel 3: Ausrüstung von Lederimitat aus recycelten Lederfasern

Die Lederstücke wurden einseitig mit einer 50/50 Mischung aus FRP und URP durch Rollenauftrag ausgerüstet; anschließend Trocknung bei 140°C für 15 Minuten. Nach 2 Stunden Tauchbad wurden die Stücke erneut getrocknet, die Fixierrate bestimmt und dem Brenntest unterzogen.

| | Auflage FSM [%] | Fixierrate [%] | Einbrennlänge |
|---|---|---|---|
| Leder A | 36,0% | 81,5% | 5 cm |
| Leder B | 28,0% | 53,2 | 6 cm |

### Beispiel 4: Ausrüstung von MDF in der Pulpe

Man gibt in eine Pulpe mit 1-2% Faseranteil (Rest Wasser) und einem pH-Wert von 4-5 ein kationisches Nassfestmittel vom Typ Polyamidoaminepichlorhydrin (PAAE)-Harz hinzu, so dass der Feststoffanteil des PAAE-Harzes etwa 5% des Feststoffes der Pulpe beträgt. Die Mischung wird für 10 Minuten homogenisiert. Anschließend gibt man 30% Feststoffanteil FRP (bezogen auf den Feststoff der Pulpe) hinzu. Die Reaktion vom PAAE-Harz mit FRP findet innerhalb weniger Sekunden statt. Nach Filtrieren, Quetschen und Trocknen befindet sich das Reaktionsprodukt zu 95% in der Faserplatte.

Die entstandene MDF Platte zeigt deutlich verbesserte Flammschutzeigenschaften.

### Beispiel 5: Textilausrüstung durch Tauch-Quetsch-Verfahren

Man nimmt 150 g FRP und 150 g URP und gibt 500 ml Wasser hinzu. Mit dieser Flotte wird ein Baumwollstoff über ein Tauch-Quetsch-Verfahren (Foulardauftrag) ausgerüstet, so dass die Flottenaufnahme 80-120% der Trockenmasse des Textils beträgt. Die Trocknung erfolgt für 15 Minuten bei Temperaturen zwischen 130-150 °C. Die Flammfestausrüstung ist ausreichend zum Erreichen der häufig vorgeschriebenen Norm DIN 4102 B2. Die Ausrüstung ist wässerungsbeständig und besitzt den Vorteil gegenüber anderen Flammschutzmitteln, da nicht nachgewaschen werden muss. Anschließend werden metallische Heftklammern und Tackernadeln auf dem Textil aufgebracht. Der Textilstoff wird anschließend 3 Wochen in einem feucht-warmen Klima gelagert. An den Kontaktstellen Stoff-Metall entsteht keine Rostbildung.

### Beispiel 6: Autoklavieren von Holz

Ein Holzstück wird in eine Lösung aus FRP und URP getaucht. Anschließend wird der gesamte Ansatz im Vakuum entlüftet. Wenn keine Blasen mehr aus dem Holz austreten, wird der Ansatz belüftet und das Holz aus der Lösung genommen. Nach Abwischen der außen anhaftenden Tropfen zeigt das Holz eine Gewichtszunahme, die abhängig ist von dem Holztyp und der Lagerungzeit in der Lösung.

Aufnahme im Holz in Gewichtsprozent nach 5 Minuten Autoklavieren

| Holztyp | FRP/URP 50/50 | FRP/URP 20/80 | FRP/URP 80/20 | Mix 50/50 + Tensid |
|---|---|---|---|---|
| Kiefer/Fichte | 18% | 25% | 13% | 20% |

### Beispiel 7: Untersuchungen zum Netzverhalten

Auf eine handelsübliche MDF-Platte werden 2 Tropfen einer 75/25 Mischung von FRP/URP gegeben und die Zeit bis zum vollständigen Einsinken gemessen. Es werden jeweils 0,4% eines Tensids zugesetzt.

| Verwendetes Tensid-Typ | Einsinkzeit von einem Tropfen |
|---|---|
| Anionische Sulfosuccinat-PPO | 60 Sekunden |
| Byk 325 | 65 Sekunden |
| Fettalkohol 10 EO | 80 Sekunden |
| Alkylsulfonat | 100 Sekunden |
| Ölsäureethoxylat | >180 Sekunden |
| 2-Ethylhexyl-Phosphonatester | 140 Sekunden |
| Ethoxiliertes Sulfat (Natriumsalz) | >180 Sekunden |

### Beispiel 8: Untersuchungen zur Aushärtungsgeschwindigkeit bei verschiedenem pH und verschiedenen Temperaturen

Die Produkte/Mischungen wurden auf eine Alufolie aufgetragen und getrocknet. Der angegebene pH wurde durch Zugabe von 70%iger phosphoriger Säure eingestellt.

| Produkt | Verhältnis | pH Wert | Temp. | Härtungszeit |
|---|---|---|---|---|
| **FRP** | **100%** | **8,2** | **100°C** | **Weich nach 4 Stunden** |
| FRP | 100% | 7 | 100°C | Hart nach 20 Minuten |
| FRP | 100% | 6 | 100°C | Hart nach 20 Minuten |
| FRP | 100% | 5,1 | 100°C | Hart nach 10 Minuten |
| FRP | 100% | 4,1 | 100°C | Hart nach 10 Minuten |
| FRP | 100% | 3,2 | 100°C | Hart nach 10 Minuten |
| **FRP/URP** | **75/25** | **7** | **100°C** | **Hart nach 60 Minuten** |
| FRP/URP | 75/25 | 6,1 | 100°C | Hart nach 30 Minuten |
| FRP/URP | 75/25 | 5,2 | 100°C | Hart nach 20 Minuten |
| FRP/URP | 75/25 | 3,9 | 100°C | Hart nach 10 Minuten |
| FRP/URP | 75/25 | 3 | 100°C | Hart nach 10 Minuten |
| **FRP** | **100%** | **8,2** | **60°C** | **weich nach 4 Stunden** |
| FRP | 100% | 7 | 60°C | Hart nach 90 Minuten |
| FRP | 100% | 6 | 60°C | Hart nach 50 Minuten |
| FRP | 100% | 5,1 | 60°C | Hart nach 20 Minuten |
| FRP | 100% | 4,1 | 60°C | Hart nach 20 Minuten |
| FRP | 100% | 3,2 | 60°C | Hart nach 40 Minuten |
| **FRP/URP** | **75/25** | **7** | **60°C** | **Hart nach 4 Stunden** |
| FRP/URP | 75/25 | 6,1 | 60°C | Hart nach 3 Stunden |
| FRP/URP | 75/25 | 5,2 | 60°C | Hart nach 30 Minuten |
| FRP/URP | 75/25 | 3,9 | 60°C | Hart nach 30 Minuten |
| FRP/URP | 75/25 | 3 | 60°C | Hart nach 50 Minuten |
| **FRP** | **100%** | **8,2** | **25°C** | **Flüssig nach 7 Tagen** |
| FRP | 100% | 7 | 25°C | Hart nach 2 Tagen |
| FRP | 100% | 6 | 25°C | Hart nach 2 Tagen |
| FRP | 100% | 5,1 | 25°C | Hart nach 2 Tagen |
| FRP | 100% | 4,1 | 25°C | Hart nach 2 Tagen |
| FRP | 100% | 3,2 | 25°C | Hart nach 2 Tagen |
| **FRP/URP** | **75/25** | **7** | 25°C | Flüssig nach 7 Tagen |
| FRP/URP | 75/25 | 6,1 | 25°C | Hart-klebrig nach 2 Tagen |
| FRP/URP | 75/25 | 5,2 | 25°C | Hart nach 2 Tagen |
| FRP/URP | 75/25 | 3,9 | 25°C | Hart nach 2 Tagen |
| FRP/URP | 75/25 | 3 | 25°C | Hart nach 2 Tagen |

## Patentansprüche

1. Verfahren zur Flammschutzausrüstung saugfähiger Substrate, bei dem man
(i) ein Umsetzungsprodukt A eines Aminoplast-Vorkondensats mit Tris(hydroxymethyl)phosphinoxid, welches Umsetzungsprodukt freie oder veretherte N-Hydroxymethylgruppen aufweist, auf das Substrat aufbringt; und
(ii) das Umsetzungsprodukt A auf dem Substrat vernetzt.

2. Verfahren nach Anspruch 1, wobei das Aminoplast-Vorkondensat ein Melamin-Formaldehydkondensat und/oder ein Harnstoff-Formaldehydkondensat ist.

3. Verfahren nach Anspruch 1 oder 2, wobei das Umsetzungsprodukt A eine mittlere Molmasse von 300 bis 3000 g/mol aufweist.

4. Verfahren nach einem der vorhergehenden Ansprüche, wobei das Umsetzungsprodukt A als wässrige Lösung mit einem Feststoffgehalt von 40 bis 80 Gew.-% vorliegt.

5. Verfahren nach einem der vorhergehenden Ansprüche, wobei man bei einer Temperatur von 110 bis 180 °C und einem pH von 6 bis 8 oder einer Temperatur von 60 bis 100 °C und einem pH von 4 bis 6 vernetzt.

6. Verfahren nach einem der vorhergehenden Ansprüche, wobei man außerdem ein Polyamidoamin-epichlorhydrinharz aufbringt und mit dem Umsetzungsprodukt A vernetzt.

7. Verfahren nach einem der Ansprüche 1 bis 5, wobei man außerdem ein Umsetzungsprodukt B von Tris(hydroxymethyl)phosphinoxid mit Harnstoff, welches Umsetzungsprodukt Aminocarbonylaminogruppen aufweist, auf das Substrat aufbringt und mit dem Umsetzungsprodukt A vernetzt.

8. Verfahren nach Anspruch 7, wobei das Umsetzungsprodukt B eine mittlere Molmasse von 250 bis 650 g/mol aufweist.

9. Verfahren nach einem der Ansprüche 7 oder 8, wobei man das Umsetzungsprodukt A und das Umsetzungsprodukt B mischt und das Gemisch auf das Substrat aufbringt.

10. Verfahren nach einem der vorhergehenden Ansprüche, wobei man das Umsetzungsprodukt A oder das Gemisch des Umsetzungsprodukts A mit dem Umsetzungsprodukt B zusammen mit einer Polymerdispersion auf das Substrat aufbringt.

11. Verfahren nach Anspruch 10, wobei das Polymer unter Polyurethanen, Styrol-Butadien-Copolymeren, Ethylen-Vinyl-Copolymeren, Polyacrylaten, Vinylacetaten und Polyacetamiden ausgewählt ist.

12. Verfahren nach einem der vorhergehenden Ansprüche, wobei das Substrat unter Textilien, Leder, Papier, Pappe, Holz oder Komposit-Materialien ausgewählt ist.

13. Verfahren nach einem der vorhergehenden Ansprüche, wobei man das Umsetzungsprodukt A oder das Gemisch des Umsetzungsprodukts A mit dem Umsetzungsprodukt B durch Autoklavieren, Tauch-, Sprüh- oder Lackierverfahren aufbringt.

## Claims

1. Method for flame retardant finishing of absorbent substrates, which comprises
(i) applying to the substrate a reaction product A of an aminoplast precondensate with tris(hydroxymethyl)phosphine oxide, which reaction product comprises free or etherified N-hydroxymethyl groups; and
(ii) cross-linking the reaction product A on the substrate.

2. Method according to claim 1, wherein the aminoplast precondensate is a melamine formaldehyde condensate and/or a urea formaldehyde condensate.

3. Method according to claim 1 or 2, wherein the reaction product A has an average molecular weight of 300 to 3000 g/mol.

4. Method according to any one of the preceding claims, wherein the reaction product A is present as an aqueous solution having a solids content of 40 to 80 wt.%.

5. Method according to any one of the preceding claims, wherein cross-linking is carried out at a temperature of 110 to 180 °C and a pH of 6 to 8 or a temperature of 60 to 100 °C and a pH of 4 to 6.

6. Method according to any one of the preceding claims, wherein a polyamidoamine-epichlorohydrin resin is additionally applied and crosslinked with the reaction product A.

7. Method according to any one of the claims 1 to 5, further comprising applying to the substrate a reaction product B of tris(hydroxymethyl)phosphine oxide with urea,
which reaction product has aminocarbonylamino groups, and cross-linking it with the reaction product A.

8. Method according to claim 7, wherein the reaction product B has a mean molecular weight of 250 to 650 g/mol.

9. Method according to any one of the claims 7 or 8, wherein the reaction product A and the reaction product B are mixed and the mixture is applied to the substrate.

10. Method according to any one of the preceding claims, wherein the reaction product A or the mixture of the reaction product A with the reaction product B is applied to the substrate together with a polymer dispersion.

11. Method according to claim 10, wherein the polymer is selected from polyurethanes, styrene-butadiene copolymers, ethylene-vinyl copolymers, polyacrylates, vinyl acetates and polyacetamides.

12. Method according to any one of the preceding claims, wherein the substrate is selected from textiles, leather, paper, cardboard, wood or composite materials.

13. Method according to any one of the preceding claims, wherein the reaction product A or the mixture of the reaction product A with the reaction product B is applied by autoclaving, dipping, spraying or painting.

## Revendications

1. Procédé permettant d'apporter une protection ignifuge à des substrats adsorbants, dans lequel
(i) on dépose sur le substrat un produit de réaction A d'un précondensat d'aminoplaste avec de l'oxyde de tris(hydroxy méthyl) phosphine, lequel produit de réaction présente des groupements N-hydroxy méthyles libres ou éthérifiés ; et
(ii) on réticule le produit de réaction A sur le substrat.

2. Procédé selon la revendication 1, dans lequel le précondensat d'aminoplaste est un condensat de mélamine-formaldéhyde et/ou un condensat d'urée-formaldéhyde.

3. Procédé selon la revendication 1 ou la revendication 2, dans lequel le produit de réaction A présente une masse moléculaire moyenne de 300 à 3000 g/mol.

4. Procédé selon l'une des revendications précédentes, dans lequel le produit de réaction A est présent sous forme d'une solution aqueuse avec une teneur en solides de 40 à 80 % en poids.

5. Procédé selon l'une des revendications précédentes, dans lequel on réticule à une température de 110 à 180 °C et à un pH de 6 à 8, ou à une température de 60 à 100 °C et un pH de 4 à 6.

6. Procédé selon l'une des revendications précédentes, dans lequel on applique en outre une résine polyamido amine-épichlorhydrine et on réticule avec le produit de réaction A.

7. Procédé selon l'une des revendications 1 à 5, dans lequel on applique en outre sur le substrat un produit de réaction B d'oxyde de tris(hydroxy méthyl) phosphine avec de l'urée, lequel produit de réaction présente des groupements aminocarbonylamino et on réticule avec le produit de réaction A.

8. Procédé selon la revendication 7, dans lequel le produit de réaction B présente une masse moléculaire moyenne de 250 à 650 g/mol.

9. Procédé selon l'une des revendications 7 ou 8, dans lequel on mélange le produit de réaction A et le produit de réaction B et on applique le mélange sur le substrat.

10. Procédé selon l'une des revendications précédentes, dans lequel on applique le produit de réaction A ou le mélange du produit de réaction A avec le produit de réaction B conjointement avec une dispersion de polymère sur le substrat.

11. Procédé selon la revendication 10, dans lequel le polymère est choisi parmi des polyuréthanes, des copolymères de styrène et de butadiène, des copolymères d'éthylène et de vinyle, des polyacrylates, des acétates de vinyle et des poly acétamides.

12. Procédé selon l'une des revendications précédentes, dans lequel le substrat est choisi parmi des textiles, du cuir, du papier, du carton, du bois ou des matériaux composites.

13. Procédé selon l'une des revendications précédentes, dans lequel on applique le produit de réaction A ou le mélange du produit de réaction A avec le produit de réaction B par un procédé en autoclave, par immersion, par pulvérisation ou par laquage.
